# EUROPEAN PATENT SPECIFICATION

(11) **EP 2 386 884 B1**
(45) Date of publication and mention of the grant of the patent: **29.04.2015**
(21) Application number: 11165293.9
(22) Date of filing: 09.05.2011
(51) Int. Cl.: G02B 5/32, G06K 7/10, G06K 19/16, G02B 5/18, G02B 27/02, G02B 27/44

(54) **Device for reading optical data supports**
Gerät zum Lesen optischer Datenträger
Appareil pour lire des supports de données optiques

(30) Priority: 12.05.2010 IT RM20100238
(43) Date of publication of application: 16.11.2011
(73) Proprietor: Istituto Poligrafico e Zecca dello Stato S.p.A., 00138 Roma (RM) (IT)
(72) Inventor: Ghisa, Giuseppe, 00138 Roma RM (IT); Casini, Michela, 00138 Roma RM (IT)
(74) Representative: Papa, Elisabetta

(56) References cited:
- EP-A1- 1 321 890
- WO-A1-95/01614
- US-A- 4 761 543
- US-A- 4 999 482
- US-A- 5 841 555
- US-A1- 2004 047 507
- US-B1- 6 365 907

## Description

### Field of the Invention

The present invention refers to an apparatus for reading an optical data carrier of the type bearing a pair of overlapped diffractive structures.

### Background

Among optical data carriers, for "optical variable device" (generally indicated with the acronym OVD) an authentication element bearing an optical diffractive profile, e.g. a hologram, is meant. This profile can implement a so-called optical diffractive code, i.e. an image detectable upon exposing the OVD to an electromagnetic wave beam, like a monochromatic light beam or a laser beam.

OVDs are widely used as anti-counterfeit elements on banknotes, credit cards, Identification cards and papers and products like value papers in general, since they are not reproducible by conventional printing techniques and can carry machine-readable information. In order to make counterfeiting more difficult, the diffractive profile of an OVD can contain a cryptographed optical diffractive code, i.e. a code detectable solely upon exposing the OVD to an electromagnetic wave beam of a determined wavelength.

In general terms, experience in the field of authentication showed that counterfeiting difficulties increase with the increasing of the complexity of the diffractive profile of the OVD. European Patent EP 1 321 890 B1 to the same holder describes just an OVD bearing a dual diffractive structure and a related reading apparatus.

US 6,365,907 discloses a device for the automatic recognition of optical markings applied onto a security element of a document. Such optical markings are read simultaneously and form a code for identifying the security element. To this aim, the device comprises a light source irradiating the security element. The diffracted light is detected by two photodetectors or by a photodetector array. A mathematical correction algorithm can be provided so as to remove possible distortions from the diffracted light pattern in case the security element is tilted.

US 4,761,543 discloses a device for reading a carrier supporting a hologram having a reflective region. The hologram is irradiated by a light source and the reflected light is detected by two photodiodes, the latter being configured with an activation threshold.

### Summary of the Invention

The technical problem set and solved by the present invention is that of providing a reading apparatus improved with respect to the known one mentioned hereto, that be versatile with respect to the type of application, allowing a reading of optical data carriers of different type.

Such a problem is solved by a reading apparatus according to claim 1.

Preferred features of the present invention are set forth in the dependent claims thereof.

The present invention provides several relevant advantages. The main advantage lies in the fact that the programmability of the reading apparatus with respect to the position of a control diffractive code or of the portion of interest thereof and with respect to the specific application of the optical data carrier allows to employ the same reader practically in all applications involving a data carrier of the type introduced above, and in which a high standard of coding and decoding security is required.

Other advantages, features and the modes of employ of the present invention will be made apparent in the detailed description of some embodiments thereof, given by way of example and not for limitative purposes, reported hereinafter.

### Brief description of the figures

Reference will be made to the figures of the annexed drawings, wherein:
- Figure 1 shows a perspective view of an embodiment of an optical data carrier suitable for use with the device of the invention;
- Figure 2 shows a block diagram related to a preferred embodiment of a reading apparatus according to the invention; and
- Figure 3 shows a schematic perspective view of a variant of the device of Figure 2.

### Detailed description of preferred embodiments

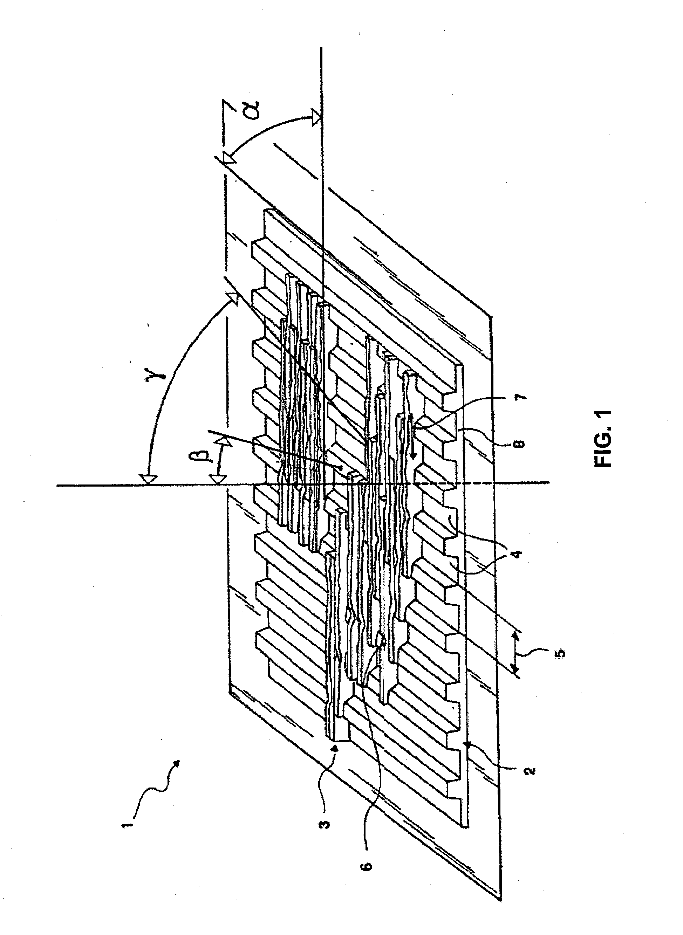

With initial reference to Figure 1, first of all, by way of example, an optical data carrier suitable to be read by the device of the invention will be described. Said optical data carrier is an optical variable device (OVD) of the type already introduced and generally indicated with 1.

Data carrier 1 provides a multilevel construction, in particular comprising a first and a second diffractive structure, 2 and 3 respectively, overlapped therebetween. Such structures 2 and 3 are obtained on a support 8 consisting e.g. of a thermoplastic material or other deep-drawable material.

The structures 2 and 3 implement each a respective optical diffractive code, hereinafter referred to as control code and information code for reasons that will be made apparent later on, detectable upon exposing the data carrier 1 to a monochromatic, preferably coherent beam of electromagnetic wave, in the present example a laser beam.

In particular, the first diffractive structure 2, i.e., in this case the lower structure, is a simple diffractive grating consisting of a plurality of parallel grooves having a substantially rectilinear development, each of which indicated with 4. The grooves 4 are arranged according to a constant pitch, indicated with a reference arrow 5, which is preferably comprised in a range of about to 1 to 4 µm.

The second diffractive structure 3, i.e., in this case the upper structure, is obtained on a level immediately adjacent to the level of the first structure 2, in order to have the latter modulate the thickness thereof. Hence, the data carrier 1 is a Grating Modulated Cryptogram or GMC.

Concerning the optimal dimensions of the reading area, the remarks reported in the Italian Patent 1 264 651 (Application No. RM9700150), incorporated herein by this reference, hold true.

The second diffractive structure 3 has a more complex configuration with respect to the first structure 2, comprising a plurality of microetchings, one thereof indicated by way of example with 6. The average direction of such microetchings determines a prevalent development direction of the second structure 3, indicated with an arrow 7.

The microetchings at issue implement said information diffractive code, which in the present embodiment is of a dot matrix type. As it is known, in this type of code the information is codified by the presence or by the absence of dots at predetermined matrix-defined locations.

More in detail, in the present example the information diffractive code is a dot Fourier cryptogram consisting of a matrix of (*nxm*) dots, wherein the first (n-1) and/or (m-1) dots of each row and/or column of the matrix codifies alphanumeric characters, and the last dot of each row is used for parity control. Hence, the memory capacity of this code is equal to 2^{(*n*-1)}x2^{(*m*-1)} possible combinations. In fact, the parity control univocally determines the values of the last row and of the last column.

The direction of the grooves 4 of the first structure 2 is transversal to said prevalent development direction 7 of the second structure 3, forming therewith an angle α which in the present embodiment is equal to about 90 deg. Preferably, said angle will anyhow be comprised in a range of about 45 to 90 deg.

In general, said angle α and the shape of the diffractive structures must enable anyway, upon exposing the data carrier to a laser beam, each structure to deviate such incident laser beam into one or more diffracted beams spatially independent from the one or more diffracted beams originated by the other structure. In other words, the diffracted beam or beams related to one of the structures should be detectable by detecting means spatially distinct from those related to the other structure.

In Figure 1, a generic diffraction angle related to the first diffractive structure 2 is indicated with β, whereas the mean diffraction angle related to the second structure 3 is indicated with γ.

The arrangement of the diffractive structures 2 and 3 can also be reversed, i.e., the first structure 2 can be overlapped to the second structure 3. Moreover, the diffractive structure 2 can be partially exposed, i.e., made partially visible, by the structure 3.

The hereto described data carrier 1 can be.applied onto any type of product or additional support requiring an authentication element, during the same manufacturing process thereof or in a separate step, and in particular on banknotes, credit cards, identification cards and papers, labels, authentication tags, security seals and products like value papers in general. In particular, the data carrier 1 can be inserted directly on such banknotes, credit cards etc. in the same manufacturing process thereof.

In the example considered herein, the data carrier 1 is assumed to be applied onto an electronic identification card, generally referred to as ID card.

A possible manufacturing process of the OVD is described in the abovementioned EP 1 321 890 B1, with specific reference to the related Figures 4A-4C. Such description of EP 1 321 890 is incorporated herein by the present reference.

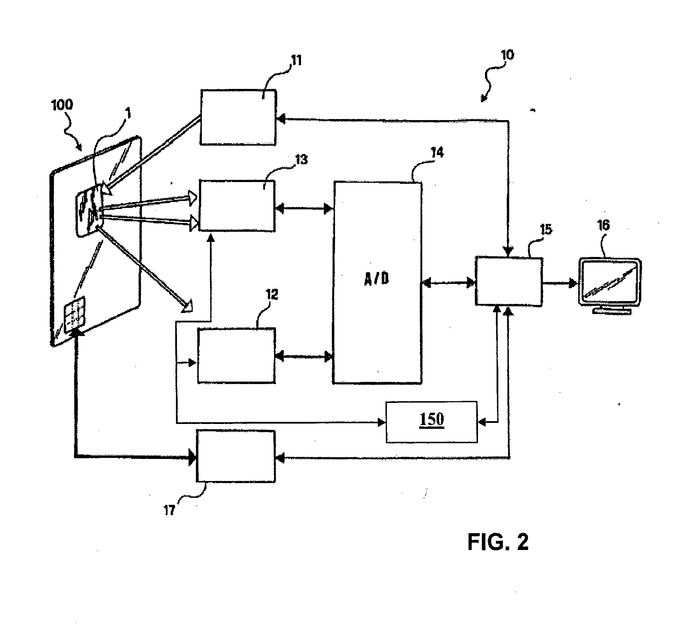

With reference to Figure 2, a reading apparatus according to a preferred embodiment of the invention is generally denoted by 10. The reading apparatus 10 is intended to be used in association with said ID card bearing the data carrier 1. By way of example, it will be assumed that said ID card be issued to an operator in order to access a determined working area.

The apparatus 10 comprises a unit 11 emitting a substantially monochromatic beam of electromagnetic waves, in this case a laser beam, apt to be incident onto the data carrier 1 of said ID card, indicated with 100, to reveal the information coded by the first and by the second diffractive structure 2 and 3.

The apparatus 10 further comprises a first unit 12 for detecting the control code associated with the first diffractive structure 2, based on first detecting means which in the present embodiment are photodiode sensing means.

The apparatus 10 further comprises a second unit 13 for detecting the information codified by the second diffractive structure 3, which, in the present embodiment comprises an image focusing optical unit and second detecting means consisting of a so-called CCD detector system, arranged at a position distinct from that of the sensing means of the first unit 12.

Preferably, both the first and second detecting means introduced so far provide the use of a respective photosensitive acquisition element such as to enable to concomitantly acquire individual dots or zones in the cryptographed image or concomitantly the entire cryptographed image.

Further, the apparatus 10 enables, in a processing unit 15 which will be introduced later on, a processing of the acquired pattern by mathematical algorithms which take into account the acquired area.

Both the first and the second detecting unit 12 and 13 communicate, via conventional-type data transmitting/receiving means, with a digitizing unit 14, in turn communicating with said processing unit 15. The latter typically consists of a processor or microprocessor comprising individually known hardware and software means. In particular, such processing unit 15 comprises memory means for the storing of authentic data and comparing means for comparing such data to those codified by the data carrier 1 of the ID card 100.

The processing unit 15 controls also the emitting unit 11, directly or via the digitizing unit 14.

In the present embodiment, the processing unit 15 further comprises automated driving means of the emitting unit 11, in order to enable said unit to emit a laser beam as soon as the ID card 100 is inserted in the apparatus 10.

In the present embodiment, the processing unit 15 provides also means for validating and/or decrypting external data acquired by an additional data acquisition unit 17 described hereinafter.

According to the invention, to the processing unit 15 also selectively programmable means 150 is associated, means 150 that in Figure 2 have been depicted as distinct from the main body of the unit 15 but that might be incorporated therein.

The means 150 is apt to receive as input and/or store:
- one or more parameters, referred to as position parameters, representative of the linear and/or angular position of the first diffractive structure 2 and/or of a portion of interest thereof, and
- one or more parameters, referred to as application parameters, representative of the specific application of the GMC.

These parameters allow adjustment of the reading apparatus 10 to applications of different type, and in particular to data supports of different type bearing the above-described diffractive structures 2 and 3.

The position parameter or parameters can be representative of the embodiment of the first diffractive structure 2 and identically reproducible for each GMC code intended for a same specific use. In fact, the control code is generated by a diffractive lattice which is at a layer underlying the structures of the information code, and moreover said control code is recorded in a step distinct from the information code recording one. This allows to originate the control code only once and reproduce it exactly identical in the subsequent recordings of the information codes.

For this reason, the position of the control code signal is an effective programming parameter of the reading apparatus 10 dedicated to a specific use.

In a more general version of the reading apparatus 10 plural positions of interest of the control code may be provided, selected by the processing unit 15 of the device 10 and/or preset by the means 150.

Concerning the application parameter or parameters, these can define the specifications of the discrimination threshold of the signal (noise level) to be read in light of the disturbance generated by the specific support 8 or by the surface on which the GMC is applied.

The application parameter or parameters are actually determined in connection to the type of employ envisaged for the reading apparatus 10 and the associated optical data carrier 1. In fact, the noise signal critically depends on the asperities of the surface of application of the diffractive structures 2 and 3 and by the modes of application on the data carrier 1. Empirically assessed, this type of parameter moreover allows to discriminate the cases of repositioning on different surfaces the label containing the GMC code.

The abovementioned parameters define the acquisition procedure of the diffractive codes by the reading apparatus 10, managed by the processing unit 15. In particular, the device 10 will reconstruct the GMC depending on the use to which it is intended. In other terms, the reader will acquire only the GMC codes meeting the parameters set.

Further, the processing unit 15 is connected to a communication unit 16, apt to provide data to a local or remote operator. In the present embodiment, the communication unit 16 is a visualisation unit comprising a monitor or a single display, and the data communicated to the operator are indications about the authenticity of the ID card 100. This visualisation unit 16 can be associated with or replaced by another unit for communicating the data detected by the apparatus 10, e.g. a transmitting unit.

The abovementioned additional data acquisition unit 17, it also communicating with the processing unit 15, is apt to read data from sources external to the apparatus 10, like, e.g., badge readers, data flows from computers, etc. This additional data acquisition unit 17 is also connected to the communication unit 16 for the possible transfer of said data externally to the apparatus 10.

In the present embodiment, it is provided that such data acquisition unit 17 is apt to detect further data contained in the ID card 100, e.g. a user's personal data stored on a dedicated microchip.

It will be understood that the block diagram of Figure 2 is purely by way of example. In particular, as mentioned hereto, some of the units indicated as distinct on this diagram could practically be incorporated into a single module, and vice versa.

It will further be understood that, though hereto reference has been made to a first and to a second detecting unit of an optical-type, the reading of the control and/or the information code carried by the diffractive structures of the data carrier 1 could also take place by detecting units comprising electronic-type reading means.

The employ modes of the reading apparatus 10 for recognizing the authenticity of the information code will hereinafter be illustrated, always with reference to Figure 2.

First of all, at the request for identification, the user provides the ID card 100 to an operator who inserts the latter in the apparatus 10, in correspondence of a suitable slot thereof.

The process takes place according to the operation flow described hereinafter.

At insertion of the ID card 100, said automated driving means commands the emission of a laser beam by the emitting unit 11. This emission can occur according to the parameters set via the means 150. The arrangement is such that this laser beam invests the data carrier 1 and is differently diffracted, in case of authenticity, by the two above described diffractive structures 2 and 3. In particular, the first diffractive structure 2 diffracts the signal in the direction of the first detecting unit 12, whereas the information codified by the second diffractive structure 3 forms as an image, e.g. on a plane parallel to that of the data carrier 1, i.e. of the ID card 100, in correspondence of the detectors of the second detecting unit 13.

Acquisition of signals - i.e., of the abovementioned image - by the detecting units 12 and 13 is carried out according to the discrimination threshold of the signal set by the means 150 and associated to the abovedescribed application parameter or parameters. Moreover, according to the specific value of the position parameter or parameters, the position of the control code is assessed, meaning that a code is read only in correspondence of the position defined by the parameters preset in the programming means 150.

This image is focused by the focusing unit and transferred onto the working plane of the capture CCD detector. The two diffractive structures 2 and 3 enable spatial independence of the diffracted signals, and therefore an independent reading of the associated codes.

This spatial independence of the two diffracted signals causes the code implemented by the first diffractive structure 2, i.e., that hereto indicated as control code, to act as access key to the reading of the information implemented by the second diffractive structure 3, actually referred to as information code.

Then, the signals detected by the two detecting units 12 and 13 are digitized in the unit 14 and transferred, e.g. in DMA mode, to the processing unit 15. The latter compares the data read onto the data carrier 1 to the stored data in order to verify the authenticity of the ID card 100.

In the present embodiment, this authenticity is verified by checking the presence of a signal detected by the first detecting unit 12, and, in the affirmative case, comparing the information code of the second diffractive structure 3 to the data stored in the processing unit 15 of the device 10.

Of course, in case one or both the detecting units 12 and 13 have not detected any diffracted signal, these will transmit a suitable signal to the processing unit 15. Evidently, the latter case occurs when the position and application parameters set are not complied with, or when the ID card 100 is counterfeited or anyhow not suitable to the type of habilitation or identification requested. For example, the ID card 100 could lack one of the two diffractive structures 2, 3, or the first diffractive structure 2 could diffract the incident laser beam in a direction different from that provided by the location of the sensors of the first detecting unit 12.

In case both codes associated with the first and to the second diffractive structure 2 and 3 correspond to the expected ones, the apparatus 10, via the visualisation unit 16, provides a corresponding consensus indication to the operator.

Of course, the information codified by the data carrier 1 can also be used to validate the further data detected by the data acquisition unit 17. In particular, the information of the data carrier 1 can be employed to decrypt the data read by the data acquisition unit 17. Thus, the apparatus 10 can act as validator or decoder of external cryptographed data flows.

Hence, in light of the above, the reading apparatus according to the invention enables the acquisition and the decoding of cryptograms having any pattern whatsoever, like, e.g., a logo or a code in general, and also, when suitable software and/or hardware means be pre-set therein, the analysis and the use in general of the decoded cryptograms.

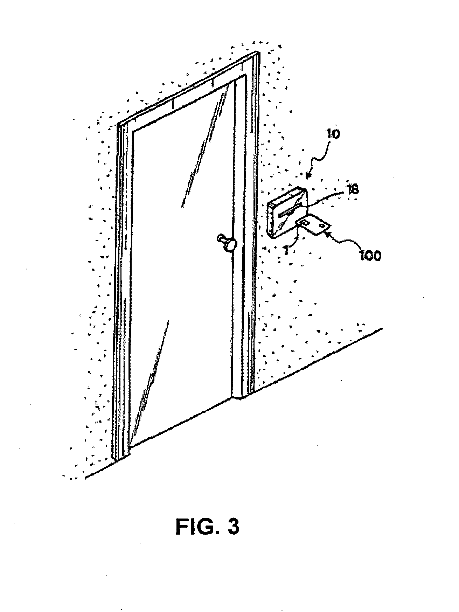

Further, Figure 3 refers to a variant embodiment wherein a user inserts directly the ID card 100 in a slot 18 of the apparatus 10, which in this case comprises a processing unit apt to directly enable the user to access the working area by commanding the opening of a door. In a further variant, the apparatus 10 could directly enable the operation of an access bar.

A further example of use of the invention may be the recognition of a code, e.g., GMC, applied on subscribers' season ticket cards for accessing the sectors of a stadium. In this case, variable information like the season of validity of the subscription may be contained in the information code of the second diffractive structure 3, while the orientation of the first diffractive structure 2 discriminates the sector assigned. The reading devices for accessing the sectors will be differently programmed, by the means 150, in order to allow entry to a preset sector to subscription holders only.

The optical reading apparatus of the invention is susceptible of several further embodiments.

E.g., the cryptographed information may be revealed with a monochromatic electromagnetic wave beam not necessarily from a laser-type source.

In light of another embodiment, the data to be compared to those coded by the data carrier can be stored, rather than in the memory of the processing unit, on a further support, e.g. a control card, insertable at a further input of the reading apparatus belonging to said additional data acquisition unit, e.g., another slot. Moreover, the information coded by the data carrier can be used for a cross decoding of the data stored on such further product or support.

Further, in light of an alternative embodiment of the reading apparatus, the latter could be implemented in modules, also in order to be more adjustable to the reading of different products on which the data carrier be applied.

Finally, it will be understood that the abovedescribed reading apparatus is susceptible of an application for the reading of any type of support, e.g. on a banknote. In the latter case, the authenticity of the banknote itself could be verified by a reading apparatus analogous to that described above in connection to Figure 2, which moreover could provide an automatic feeder instead of said manual insertion slot.

The present invention has been hereto described with reference to preferred embodiments thereof. It is understood that other embodiments might exist, all falling within the concept of the same invention, as defined by the protective scope of the claims hereinafter.

## Claims

1. A reading apparatus (10) of an optical data carrier (1) bearing a first diffractive structure (2) and a second (3) diffractive structure obtained on overlapped levels, wherein the second structure (3) bears an information diffractive code and the first structure (2) bears a control diffractive code apt to act as a read key for said information code, the construction being such that, when the data carrier (1) is exposed to a substantially monochromatic beam of electromagnetic waves, each of the first diffractive structure (2) and the second diffractive structure (3) deviates such incident beam into one or more diffracted beams spatially independent from the one or more diffracted beams originated by the other structure, which apparatus (10) comprises:
- an emitting unit (11), apt to emit a substantially monochromatic beam of electromagnetic waves apt to be deviated by the first diffractive structure (2) and the second diffractive structure (3);
- a first detecting unit (12), for detecting the control code of the first diffractive structure (2) of the data carrier (1) from the one or more diffracted beams originated by the first diffractive structure (2), comprising first detecting means;
- a second detecting unit (13), for detecting the information code of the other diffractive structure (3) of the data carrier (1) from the one or more diffracted beams originated by the second diffractive structure (3), comprising second detecting means arranged at a position distinct from that of the first detecting means; and
- a processing unit (15), apt to verify the authenticity of the data carrier (1) according to the detections of said detecting units (12, 13),
**characterised in that** it further comprises
- programming means (150) selectively programmable with and apt to store at least one application parameter representative of the specific application of the data carrier (1) bearing the diffractive structures (2, 3), and having preset at least one position parameter related to a linear and/or angular position of the first diffractive structure (2);
wherein said at least one application parameter defines a discrimination threshold of at least one of the optical codes of the diffractive structures,
wherein said position parameter is representative of the linear and/or angular position of the first diffractive structure (2) on the data carrier (1), and wherein, in use, the first detecting unit (12) reads the control diffractive code of the first diffractive structure (2) only in correspondence of one or more positions defined by said at least one position parameter preset in said programming means (150).

2. The reading apparatus (10) according to any one of the preceding claims, comprising a visualisation unit (16) apt to provide an indication about the authenticity of the data carrier (1) to an operator.

3. The reading apparatus (10) according to any one of the preceding claims, comprising a further data acquisition unit (17), apt to read data from sources external to the apparatus itself.

4. The reading apparatus (10) according to the preceding claim, wherein said further data acquisition unit (17) is apt to acquire data stored in an element (100) bearing the optical data carrier (1).

## Patentansprüche

1. Lesevorrichtung (10) eines optischen Datenträgers (1), der eine erste diffraktive Struktur (2) und eine zweite (3) diffraktive Struktur trägt, die auf überlappenden Ebenen erhalten werden, wobei die zweite Struktur (3) einen diffraktiven Informationscode und die erste Struktur (2) einen diffraktiven Steuercode, der geeignet ist, als ein Leseschlüssel für den Informationscode zu agieren, trägt, wobei die Konstruktion so ist, dass, wenn der Datenträger (1) einem im Wesentlichen monochromatischen Strahl von elektromagnetischen Wellen ausgesetzt wird, sowohl die erste diffraktive Struktur (2) als auch die zweite diffraktive Struktur (3) einen solchen entfallenden Strahl in einen oder mehrere diffraktive Strahlen, unabhängig von dem einen oder den mehreren diffraktiven Strahlen, die von der anderen Struktur stammen, ablenken, wobei die Vorrichtung (10) umfasst:
- eine Sendeeinheit (11), die geeignet ist einen im Wesentlichen monochromatischen Strahl von elektromagnetischen Wellen zu emittieren, der geeignet ist durch die erste diffraktive Struktur (2) und die zweite diffraktive Struktur (3) abgelenkt zu werden;
- eine erste Detektiereinheit (12) zum Detektieren des Steuercodes der ersten diffraktiven Struktur (2) des Datenträgers (1) von dem einen oder den mehreren diffraktiven Strahlen, die von der ersten diffraktiven Struktur (2) stammen, die ein erstes Detektiermittel umfasst;
- eine zweite Detektiereinheit (13) zum Detektieren des Informationscodes der anderen diffraktiven Struktur (3) des Datenträgers (1) von dem einen oder den mehreren diffraktiven Strahlen, die von der zweiten diffraktiven Struktur (3) stammen, die ein zweites Detektiermittel umfasst, das an einer Stelle angeordnet ist, die von der des ersten Detektiermittels verschieden ist; und
- eine Verarbeitungseinheit (15), die geeignet ist die Authentizität des Datenträgers (1) zu verifizieren, gemäß den Detektionen der Detektiereinheiten (12, 13), **dadurch gekennzeichnet, dass** sie weiterhin umfasst:
- ein Programmiermittel (150), das selektiv programmierbar ist mit (und geeignet ist zu speichern): mindestens einem (einen) Anwendungsparameter, der die spezifische Anwendung des Datenträgers (1) darstellt, der die diffraktiven Strukturen (2, 3) trägt, und über mindestens einen voreingestellten Standortparameter, in Beziehung zu einem linearen und/oder eckigen Standort der ersten diffraktiven Struktur (2), verfügt;
wobei der mindestens eine Anwendungsparameter einen Diskriminierungsschwellenwert von mindestens einem der optischen Codes der diffraktiven Strukturen definiert,
wobei der Standortparameter den linearen und/oder eckigen Standort der ersten diffraktiven Struktur (2) auf dem Datenträger (1) darstellt, und
wobei, unter Verwendung, die erste Detektiereinheit (12) den diffraktiven Steuercode der ersten diffraktiven Struktur (2) nur in Beziehung zu einem oder mehreren Standorten liest, die durch den mindestens einen Standortparameter definiert werden, der in dem Programmiermittel (150) voreingestellt ist.

2. Lesevorrichtung (10) gemäß einem der vorangehenden Ansprüche, die eine Visualisierungseinheit (16) umfasst, die geeignet ist, einem Betreiber eine Anzeige über die Authentizität des Datenträgers (1) zur Verfügung zu stellen.

3. Lesevorrichtung (10) gemäß einem der vorangehenden Ansprüche, die eine weitere Datenerfassungseinheit (17) umfasst, die geeignet ist, Daten aus Quellen zu lesen, die außerhalb der Vorrichtung selbst liegen.

4. Lesevorrichtung (10) gemäß dem vorangehenden Anspruch, wobei die weitere Datenerfassungseinheit (17) geeignet ist, Daten zu erfassen, die in einem Element (100) gespeichert sind, das den optischen Datenträger (1) trägt.

## Revendications

1. Appareil de lecture (10) d'un support de données optique (1) portant une première structure diffractive (2) et une deuxième structure diffractive (3) obtenues sur des niveaux qui se chevauchent, dans lequel la deuxième structure (3) porte un code diffractif d'information et la première structure (2) porte un code diffractif de commande apte à agir en tant que clé de lecture pour ledit code d'information, la construction étant telle que, quand le support de données (1) est exposé à un faisceau d'ondes électromagnétiques substantiellement monochromatique, chacune des première structure diffractive (2) et deuxième structure diffractive (3) dévie ce faisceau incident en un ou plusieurs faisceaux diffractés spatialement indépendants du ou des faisceaux diffractés qui proviennent de l'autre structure, lequel appareil (10) comprend :
- une unité émettrice (11) apte à émettre un faisceau d'ondes électromagnétiques substantiellement monochromatique apte à être dévié par la première structure diffractive (2) et par la deuxième structure diffractive (3) ;
- une première unité de détection (12), pour détecter le code de commande de la première structure diffractive (2) du support de données (1) parmi lesdits un ou plusieurs faisceaux diffractés provenant de la première structure diffractive (2), comprenant un premier moyen de détection ;
- une deuxième unité de détection (13), pour détecter le code d'information de l'autre structure diffractive (3) du support de données (1) parmi lesdits un ou plusieurs faisceaux diffractés provenant de la deuxième structure diffractive (3), comprenant un deuxième moyen de détection placé en une position distincte de celle du premier moyen de détection ; et
- une unité de traitement (15), apte à vérifier l'authenticité du support de données (1) selon les détections desdites unités de détection (12, 13),
**caractérisé en ce qu'**il comprend en outre
- un moyen de programmation (150) pouvant être programmé sélectivement avec et apte à stocker au moins un paramètre d'application représentatif de l'application spécifique du support de données (1) qui porte les structures diffractives (2, 3), et dans lequel est préréglé au moins un paramètre de position se rapportant à une position linéaire et/ou angulaire de la première structure diffractive (2) ;
dans lequel ledit au moins un paramètre d'application définit un seuil de discrimination d'au moins l'un des codes optiques des structures diffractives,
dans lequel ledit paramètre de position est représentatif de la position linéaire et/ou angulaire de la première structure diffractive (2) sur le support de données (1), et
dans lequel, en utilisation, la première unité de détection (12) lit le code diffractif de commande de la première structure diffractive (2) seulement en correspondance d'une ou de plusieurs positions définies par ledit au moins un paramètre de position préréglé dans ledit moyen de programmation (150).

2. Appareil de lecture (10) selon l'une quelconque des revendications précédentes, comprenant une unité de visualisation (16) apte à fournir une indication sur l'authenticité du support de données (1) à un opérateur.

3. Appareil de lecture (10) selon l'une quelconque des revendications précédentes, comprenant une unité d'acquisition de données supplémentaire (17), apte à lire des données provenant de sources extérieures à l'appareil lui-même.

4. Appareil de lecture (10) selon la précédente revendication, dans lequel ladite unité d'acquisition de données supplémentaire (17) est apte à acquérir des données stockées dans un élément (100) qui porte le support de données optique (1).
